# EUROPÄISCHE PATENTANMELDUNG

(11) **EP 4 212 766 A1**
(43) Veröffentlichungstag der Anmeldung: **19.07.2023**
(21) Anmeldenummer: 22151457.3
(22) Anmeldetag: 13.01.2022
(51) Int. Cl.: F16L 9/18

(54) **ROHRLEITUNGSSYSTEM ZUM FÜHREN REAKTIVER FLUIDE UND DESSEN VERWENDUNG**

(71) Anmelder: Hübner, Dietmar Roland, 13086 Berlin (DE)
(72) Erfinder: Rainer Schulze, Johann, 51647 Gummersbach (DE)
(74) Vertreter: Taubert, Diana

(57) **Zusammenfassung**

Die Erfindung betrifft ein Rohrleitungssystem (10) und dessen Verwendung zum Führen reaktiver Fluide. Dabei umfasst das Rohrleitungssystem (10) ein äußeres Rohr (5) mit einem ersten Durchmesser (d₃), ein im äußeren Rohr (5) angeordnetes mittiges Rohr (3) mit einem zweiten Durchmesser (d₂), ein im mittigen Rohr (3) angeordnetes inneres Rohr (1) mit einem dritten Durchmesser (d₁).

Erfindungsgemäß ist vorgesehen, die Rohre (1, 3, 5) jeweils derart ineinander anzuordnen, dass sie zueinander parallel verlaufen und einander zugewandte Oberflächen benachbarter Rohre sich nicht berühren.

## Beschreibung

Die Erfindung betrifft ein Rohrleitungssystem zum Führen von reaktiven Fluiden, dessen Verwendung sowie ein Verfahren dazu.

Bei der zeitnahen Entwicklung einer marktwirtschaftlich organisierten Wasserstoffwirtschaft in Deutschland kommt dem Wasserstofftransport eine zentrale Rolle zu. Überregionale Wasserstofftransporte verbinden Produzenten und Konsumenten und binden den deutschen Wasserstoffmarkt in ein europäisches Wasserstoffnetz ein. An das überregionale Transportnetz angeschlossene, unterirdische Wasserstoffspeicher flankieren als saisonale Speicher das System und ermöglichen die zeitliche Entkopplung von Erzeugung und Verbrauch.

Das Thema Wasserstofftransport ist eines der zentralen Punkte zum Aufbau einer Wasserstoffwirtschaft. Dass Deutschland bei der Umsetzung seiner Wasserstoffstrategie auf Importe setzen muss, ist mittlerweile unstrittig. Diskutiert wird dagegen derzeit vor allem, woher, auf welchem Weg und auch in welcher Form der Wasserstoff am Bestimmungsort ankommt. Neben dem Transport über Pipelines ist insbesondere für längere Strecken auch die Verschiffung in Containern eine Option.

Neben dem Problem der Logistik ist mit dem Transport von Wasserstoff auch ein hohes Gefährdungspotential verbunden. Wasserstoff reagiert in Gegenwart bereits geringer Mengen Sauerstoff stark exotherm zu Wasser.

Mit der verbreiteten Nutzung der Wasserstoffenergie tritt noch ein weiteres Problem zutage. Obschon das bei der Reaktion entstehende Produkt Wasser ungiftig und grundsätzlich schadfrei ist, steht zu erwarten, dass eine unkontrollierte Freisetzung, insbesondere in Ballungszentren mit deutlichen Einschränkungen verbunden ist. Bei der überwiegend privaten Nutzung, ebenso wie bei der Nutzung im Stadtverkehr als Fahrzeugantrieb, würde das Edukt in Bodennähe entstehen und anders als bei Fabriken nicht in mehreren hundert Metern Höhe. Damit verbunden ist eine deutliche und spürbare Erhöhung der Luftfeuchte in Bodennähe, welche je nach Wetterlage zu Nebelbildung und den damit einhergehenden Einschränkungen führen kann.

Aufgabe der vorliegenden Erfindung ist es die Probleme des Standes der Technik zu beseitigen oder zumindest zu reduzieren. Insbesondere soll eine Vorrichtung bereitgestellt werden, die es ermöglicht, die Edukte einer Brennstoffzellenreaktion sicher zum Bestimmungsort zu transportieren und dessen Produkte gezielt von dort weg.

Diese Aufgabe wird durch ein Rohrleitungssystem und ein Verfahren mit den Merkmalen der unabhängigen Ansprüche gelöst.

Somit betrifft ein erster Aspekt der Erfindung ein Rohrleitungssystem zum Führen reaktiver Fluide umfassend ein äußeres Rohr mit einem ersten Durchmesser (d1). In diesem äußeren Rohr ist ein mittiges Rohr mit einem zweiten Durchmesser (d2) angeordnet, welches wiederum ein inneres Rohr mit einem dritten Durchmesser (d3) aufweist. Dabei sind die Rohre jeweils derart ineinander angeordnet, dass sie zueinander parallel verlaufen und einander zugewandte Oberflächen benachbarter Rohre sich nicht berühren. Mit anderen Worten verlaufen die Rohre derart, dass benachbarte Oberflächen benachbarter Rohre äquidistant sind. Der Vorteil in diesem Rohrsystem liegt darin, dass mit minimalem Platzbedarf ein Leitungssystem von gleich drei Medien erfolgt. Dabei wird, anders als beim Rohr-im-Rohr-Verbau, bei der Sanierung von Rohrleitungen der Zwischenraum zwischen benachbarten Rohren genutzt. Er dient nicht nur als Isolation, sondern vielmehr dem Fluidtransport. Somit können über eine Leitung mehrere, im Idealfall alle Edukte dem Bestimmungsort zugeführt werden. Im Vergleich zum Transport dreier nebeneinander angeordneter Rohre mit gleichem Volumen, benötigt das erfindungsgemäße System einen um mindestens das Anderthalbfache eines der freien Volumina reduziertes Volumen. Dabei ist unter freien Volumina das jeweils einem Gas zur Verfügung stehende Volumen.

In bevorzugter Ausgestaltung der Erfindung ist vorgesehen, dass das Rohrleitungssystem Abstandselemente, vorzugsweise thermisch und/oder elektrisch isolierende Abstandselemente, zwischen dem äußeren und dem mittigen Rohr und/oder zwischen dem mittigen und dem inneren Rohr aufweist. Diese Abstandselemente stellen den äquidistanten Verlauf sicher. Hierzu sind die Abstandselemente bevorzugt gleichmäßig verteilt. Ferner werden nicht mehr Abstandselemente als zwingend für die Stabilisierung nötig angeordnet, um den Strömungswiderstand und/oder die angeströmte Oberfläche möglichst gering zu halten.

Weiter bevorzugt sind die Abstandselemente thermisch und/oder elektrisch isolierend. Dies stellt sicher, dass keine Wärmeübertragung zwischen benachbarten Rohren erfolgt. Alternativ weisen die Abstandselemente eine möglichst große Berührungsfläche an den mit ihnen verbundenen Rohren auf und sind aus thermisch gut leitendem Material gefertigt. Dies ermöglicht, insbesondere in Kombination mit einem Kühlsystem, eine gleichmäßige Temperaturregelung, insbesondere Kühlung des inneren und/oder mittleren Rohrs.

In bevorzugter Ausgestaltung der Erfindung ist ferner vorgesehen, dass zumindest eines der Rohre einen Kunststoff, vorzugsweise eine Kohlenstofffaser-Struktur mit Glasfaser-Auflage eingebettet in eine Kunststoffmatrix, insbesondere Epoxidharz, ein Perfluoralkoxy (PFA, MFA), ein Polytetrafluorethylen (PTFE), ein Fluoriertes Ethylenpropylen (FEP) und/oder ein Kohlenstofffaserverstärkte Polymer (FRP) oder einen hochreinen Edelstahl umfasst. Derartige Materialien haben sich für den Transport von Wasserstoff als geeignet erwiesen, da die kritische Metallversprödung umgangen werden kann und somit eine Diffusion von Wasserstoff reduziert oder sogar vermieden werden kann.

Besonders bevorzugt weist das innere Rohr die vorgenannten Materialien auf und ist somit insbesondere ausgebildet, ein hoch reaktives Fluid, vorzugsweise Wasserstoff oder eine wasserstofffreisetzende Verbindung, zu führen.

Vorliegend ist unter wasserstofffreisetzend ein Fluid zu verstehen, in welchem Wasserstoff chemisch oder physikalisch gebunden vorliegt. Dies ist beispielsweise für Methanol der Fall.

Mit Vorteil weist zumindest eines der Rohre, insbesondere das innere und/oder das mittlere Rohr, einen Sensor auf. Je nach Ausgestaltung des Sensors ist dieser Sensor ins Innere des inneren Rohres gerichtet, oder derart angeordnet, dass ein Fühler in den Zwischenraum zwischen innerem und mittigen Rohr hineinragt. Alternativ oder zusätzlich kann ein Sensor, insbesondere ein Temperatursensor, mit einer inneren oder äußeren Oberfläche eines der drei Rohre flächig oder punktuell verbunden sein.

Die Sensoren sind bevorzugt Temperatursensoren, Drucksensoren, sowie Sensoren zur Konzentrationsmessung bestimmter Gase, insbesondere von Wasserstoff. Somit kann eine Veränderung der geförderten Eduktkonzentration, beispielsweise infolge von Leckage oder chemischer Reaktion. Damit wird wiederum eine mögliche Leckage sichtbar.

Mit besonderem Vorteil ist im mittigen Rohr ein Pufferelement angeordnet, welches vorzugsweise geeignet ist, Wasserstoff chemisch oder physikalisch zu binden. Hierfür ist, wie oben gezeigt, beispielsweise Methanol, aber auch Materialien, die eine Chemiesorption oder eine Adsorption, insbesondere Physisorption von Wasserstoff ermöglichen. Hierbei sind beispielsweise expandierte Graphitmaterialien und Metallorganische Netzwerke bekannt.

Alternativ wird als Pufferelement ein Fluid verwendet, welches nur eine reduzierte Bindungswirkung für Wasserstoff zeigt, aber mit diesem nicht reagiert. Insbesondere ist bevorzugt, dass das Pufferelement Wasser ist oder umfasst, welches vorzugsweise als Produkt bei einer Brennstoffzellenreaktion entstanden ist.

Mit besonderem Vorteil ist die Fließrichtung in einem der Rohre, vorzugsweise des mittigen Rohrs der Fließrichtung der anderen Rohre entgegengesetzt ist. Dies ermöglicht, dass sowohl Edukte, als auch Produkte einer chemischen Reaktion, insbesondere einer Brennstoffzellenreaktion mit dem Rohrleitungssystem simultan geführt werden können.

Dabei ist besonders bevorzugt, dass das Produkt, im Falle einer Brennstoffzellenreaktion Wasser im mittigen Rohr geführt wird. Als Produkt hat es die Eigenschaft mit den Edukten nicht mehr zu reagieren. Sollte es zu einem Leck innerhalb des Rohrleitungssystems kommen, würde das Produkt als Puffer wirken und die Edukte allenfalls vermischen und mithin endotherme Reaktionen verhindern.

Ein weiterer Aspekt der Erfindung ist daher die Verwendung des erfindungsgemäßen Rohrleitungssystems zum Transport von Fluiden, wobei im inneren und im äußeren Rohr Edukte und im mittigen Rohr Produkte einer Reaktion, vorzugsweise einer Brennstoffzellenreaktion geführt werden.

Dabei ist bevorzugt vorgesehen, dass im inneren Rohr Wasserstoff, im äußeren Rohr Sauerstoff und im mittigen Rohr Wasser geführt werden. Das Produkt der Brennstoffzellenreaktion, also im Wesentlichen der Knallgasreaktion, nämlich Wasser wird bei dieser Verwendung nicht mehr als Abfall beseitigt, sondern kann über das Rohrleistungssystem zu dem Ort der Hydrolyse zurückgeführt werden. Dort kann es wiederaufbereitet oder dem Wasserkreislauf gezielt wieder zugeführt werden. Damit wird die Verfügbarkeit des Wassers im Gegensatz zu derzeitiger Handhabung, die in der Freisetzung des Produkts in die Atmosphäre besteht, deutlich verkürzt. Das Wasser wird also nicht in den natürlichen Wasserkreislauf entlassen, dem es dann wieder aufwändig und vor allem energieintensiv wieder entnommen werden muss. Vielmehr steht Wasser zur Verfügung, welches aufgrund der Gewinnung hoch rein ist und wiederum als Edukt für die Hydrolyse oder aber für andere Produktionsverfahren oder direkt zur Abfüllung als destilliertes Wasser zur Verfügung.

Bei der mobilen Nutzung von Brennstoffenergie, beispielsweise im Automobil- oder Schienenverkehr, wird das erfindungsgemäße Rohrleistungssystem insbesondere als Zu- und Ableitungssystem zu Tankstellen etc. verwendet. Im Automobil hingegen wird ein Tanksystem verwendet, welches bevorzugt eine Mehrzahl, insbesondere drei Tanks aufweist. Die Tanks teilen sich in Edukttanks, beispielsweise Wasserstoff und Sauerstoff und zumindest einen Produkttank auf. Ferner weist das Tanksystem bevorzugt ein Zuleitungssystem auf, welches das am Tankstutzen das erfindungsgemäße dreifache Rohr aufnehmen kann und sich dann zu den jeweiligen Tanks verzweigt. Hier bietet sich eine Normung an, da an der Tankstelle der Stutzen gasdicht mit dem Zuleitungssystem abschließbar ausgelegt sein muss um eine Vermischung beim Tankvorgang zu verhindern.

Die beschriebenen Ausführungsformen sind, sofern im Einzelfall nicht anders beschrieben, mit Vorteil miteinander kombinierbar.

Nachfolgend wird die Erfindung anhand einer beispielhaften bevorzugten Ausgestaltung unter Zuhilfenahme einer Figur näher beschrieben.

### Die einzige Figur zeigt:

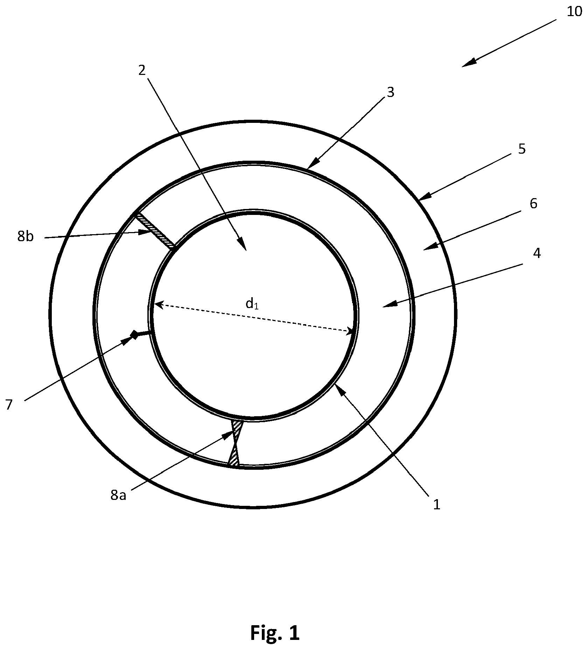

- Figur 1:: eine schematische Darstellung eines Querschnitts des erfindungsgemäßen Rohrsystems in einer bevorzugten Ausgestaltung.

Figur 1 zeigt das erfindungsgemäße Rohrleitungssystem 10 in einer bevorzugten Ausgestaltung. Das Rohrleistungssystem 10 weist drei Rohre 1, 3 und 5 auf, die derart ineinander angeordnet sind, dass sie äquidistant zueinander verlaufen. Das innere Rohr 1 weist den kleinsten Durchmesser d₁ auf.

Bei der erfindungsgemäßen Verwendung wird im freien Volumen 2 des inneren Rohres 1 ein reaktives und/oder flüchtiges Fluid, insbesondere Wasserstoff geführt. Das freie Volumen wird durch einen inneren Durchmesser d₁ und der Länge des inneren Rohres 1 definiert. Das innere Rohr 1 ist bevorzugt aus inertem Material gefertigt und kann zudem eine zusätzliche Isolierung aufweisen. Beim Transport von Wasserstoff umfasst das innere Rohr beispielsweise einen Kunststoff, vorzugsweise eine Kohlenstofffaser-Struktur mit Glasfaser-Auflage eingebettet in eine Kunststoffmatrix, insbesondere Epoxidharz, ein Perfluoralkoxy (PFA, MFA), ein Polytetrafluorethylen (PTFE), ein Fluoriertes Ethylenpropylen (FEP) und/oder ein Kohlenstofffaserverstärkte Polymer (FRP) oder ist aus einem solchen gefertigt. Alternativ kann das Rohr aus einem hochreinen Edelstahl gefertigt sein.

Das innere Rohr 1 ist, insbesondere konzentrisch in einem mittleren Rohr 3 angeordnet. Das mittlere Rohr 3 weist ein freies Volumen 4 zum Transport eines Fluids auf, welches durch einen inneren Durchmesser d₂ des mittleren Rohres 3 reduziert um einen äußeren Durchmesser des inneren Rohres 1 definiert ist. In erfindungsgemäßer Verwendung wird im freien Volumen 4 des mittleren Rohres 3 ein Puffermaterial geführt, welches nicht mit den angrenzenden Rohren 1 und 5 geführten Fluiden reagiert. Bei der Verwendung zum Transport von Brennstoffzellengasen, wird im mittleren Rohr 3 bevorzugt das Produkt Wasser geführt. Dabei ist die Fließrichtung der der anderen Rohre 1 und 5 entgegengesetzt.

Das mittige Rohr 3 ist wiederum, insbesondere konzentrisch in einem äußeren Rohr 5 angeordnet, dessen freies Volumen durch einen inneren Durchmesser (d₃) des äußeren Rohres 5 bestimmt ist, der um einen äußeren Durchmesser des mittigen Rohres 3 reduziert ist. In diesem freien Volumen wird in erfindungsgemäßer Verwendung bevorzugt ein Edukt einer Brennstoffzellenreaktion, insbesondere Sauerstoff geführt.

Die Rohre 1, 3 und 5 können druckstabil ausgeführt und über eine Ummantelung verfügen, die beispielsweise ausgelegt ist ein bersten des Rohres, eine Leckage oder einen thermischen Austausch mit der Umgebung zu verhindern.

Zur Stabilisierung können zwischen den benachbarten Rohren 1 und 3 oder 3 und 5 Abstandselemente 8a, 8b angeordnet sein. Diese können zusätzlich über eine thermische und/oder elektrische Isolierung verfügen oder auch ausgelegt sein eine solche aktiv zu begünstigen. Um einen Strömungswiderstand im freien Volumen 4 oder 6 möglichst nicht zu erhöhen können die Abstandselemente 8a in einem mittleren Abschnitt eine Verjüngung aufweisen.

Zudem können in den freien Volumina 2, 4 und/oder 6 Sensoren 7 zur Konzentrations-, Temperatur-, Erschütterungs- oder Druckmessung angeordnet sein. Alternativ sind derartige Sensoren mit Kontakt zu einer inneren oder äußeren Oberfläche eines der Rohre 1, 3 oder 5 angeordnet.

Das erfindungsgemäße Rohrleitungssystem 10 hat die Funktion bei minimalem Raumbedarf sowohl fluide Edukte, als auch fluide Produkte chemischer Reaktionen, insbesondere von Brennstoffzellenreaktionen zwischen einen Reaktions- und einem Gewinnungs- oder Lagerort zu transportieren.

### Bezugszeichenliste

- 10: Rohrleitungssystem

- 1: inneres Rohr
- 2: freies Volumen des inneren Rohres
- 3: mittiges Rohr
- 4: freies Volumen des mittigen Rohres
- 5: äußeres Rohr
- 6: freies Volumen des äußeren Rohres
- 7: Sensor
- 8a, 8b: Abstandselemente

## Patentansprüche

1. Rohrleitungssystem (10) zum Führen reaktiver Fluide umfassend
- ein äußeres Rohr (5) mit einem ersten Durchmesser (d₃),
- ein im äußeren Rohr (5) angeordnetes mittiges Rohr (3) mit einem zweiten Durchmesser (d₂),
- ein im mittigen Rohr (3) angeordnetes inneres Rohr (1) mit einem dritten Durchmesser (d₁),
wobei die Rohre (1, 3, 5) jeweils derart ineinander angeordnet sind, dass sie zueinander parallel verlaufen und einander zugewandte Oberflächen benachbarter Rohre sich nicht berühren.

2. Rohrleitungssystem (10) nach Anspruch 1, wobei das Rohrleitungssystem (1) Abstandselemente (8a, 8b), vorzugsweise thermisch und/oder elektrisch isolierende Abstandselemente (8a, 8b) zwischen dem äußeren (5) und dem mittigen Rohr (3) und/oder zwischen dem mittigen (3) und dem inneren Rohr (1) aufweist.

3. Rohrleitungssystem (10) nach einem der vorhergehenden Ansprüche, wobei zumindest eines der Rohre (1, 3, 5) einen Kunststoff, vorzugsweise eine Kohlenstofffaser-Struktur mit Glasfaser-Auflage eingebettet in eine Kunststoffmatrix, insbesondere Epoxidharz, ein Perfluoralkoxy (PFA, MFA), ein Polytetrafluorethylen (PTFE), ein Fluoriertes Ethylenpropylen (FEP) und/oder ein Kohlenstofffaserverstärkte Polymer (FRP) oder einen hochreinen Edelstahl umfasst.

4. Rohrleitungssystem (10) nach einem der vorhergehenden Ansprüche, wobei zumindest das innere Rohr einen Sensor aufweist.

5. Rohrleitungssystem (10) nach einem der vorherigen Ansprüche, wobei das innere Rohr (1) ausgebildet ist, ein hoch reaktives Fluid, vorzugsweise Wasserstoff oder eine wasserstofffreisetzende Verbindung, zu führen.

6. Rohrleitungssystem (10) nach einem der vorherigen Ansprüche, wobei im mittigen Rohr (3) ein Pufferelement angeordnet ist, welches vorzugsweise geeignet ist, Wasserstoff chemisch oder physikalisch zu binden.

7. Rohrleitungssystem (10) nach Anspruch 6, wobei das Pufferelement Wasser ist oder umfasst, welches vorzugsweise als Produkt bei einer Brennstoffzellenreaktion entstanden ist.

8. Rohrleitungssystem (10) nach einem der vorherigen Ansprüche, wobei die Fließrichtung eines der Rohre (1, 3, 5), vorzugsweise des mittigen Rohrs (3) der Fließrichtung der anderen Rohre (1, 5) entgegengesetzt ist.

9. Verwendung eines Rohrleitungssystems (10) nach einem der vorhergehenden Ansprüche zum Transport von Fluiden, wobei im inneren (1) und im äußeren Rohr (5) Edukte und im mittigen Rohr (3) Produkte einer Reaktion, vorzugsweise einer Brennstoffzellenreaktion geführt werden.

10. Verwendung nach Anspruch 9, wobei im inneren Rohr (1) Wasserstoff, im äußeren Rohr (5) Sauerstoff und im mittigen Rohr (3) Wasser geführt werden.
